# EUROPÄISCHE PATENTSCHRIFT

(11) **EP 2 440 432 B1**
(45) Veröffentlichungstag und Bekanntmachung des Hinweises auf die Patenterteilung: **17.01.2018**
(21) Anmeldenummer: 10725085.4
(22) Anmeldetag: 09.06.2010
(51) Int. Cl.: B60R 16/033

(54) **SCHALTUNGSANORDUNG UND STEUERVERFAHREN ZUR SPANNUNGSSTÜTZUNG EINES BORDNETZES EINES FAHRZEUGS**
CIRCUIT AND CONTROL METHOD FOR TENSION SUPPORT OF A VEHICLE'S ELECTRIC POWER NETWORK
CIRCUIT ET MÉTHODE DE COMMANDE POUR RUPPORT DU TENSION DANS UN RÉSEAU DE BORD D'UN VÉHICULE

(30) Priorität: 09.06.2009 DE 102009024345
(43) Veröffentlichungstag der Anmeldung: 18.04.2012
(73) Patentinhaber: Lisa Dräxlmaier GmbH, 84137 Vilsbiburg (DE)
(72) Erfinder: WORTBERG, Michael, 84405 Dorfen (DE)
(86) Internationale Anmeldenummer: PCT/EP2010/058063
(87) Internationale Veröffentlichungsnummer: WO 2010/142712

(56) Entgegenhaltungen:
- DE-A1- 10 112 921
- DE-A1-102004 016 292
- DE-A1-102004 043 129
- FR-A1- 2 853 154
- US-A1- 2007 090 808

## Beschreibung

### Gebiet der Erfindung

Die vorliegende Erfindung betrifft eine Schaltungsanordnung und ein Steuerverfahren zur Spannungsstützung eines Bordnetzes eines Fahrzeugs und insbesondere eine Schaltungsanordnung und ein Steuerverfahren zur Spannungsstützung eines Bordnetzes mit einem Doppelschicht-Kondensator, der in Reihe schaltbar ist mit einer anderen Spannungsquelle.

### Stand der Technik

Moderne Fahrzeuge werden aufgrund der Problematik des CO₂-Ausstoßes im Leerlauf zunehmend mit einer Start-Stop-Funktion ausgestattet. Bei der Start-Stop-Funktion wird der Motor z.B. beim Anhalten des Fahrzeugs an einer Ampel ausgeschaltet um Kraftstoff zu sparen und um die CO₂-Emission zu reduzieren. Zum Weiterfahren wird der Motor über den Starter wieder gestartet. Da der Starter zum Losreißen des Motors bis zu 800A Strom zieht, fällt am Innenwiderstand der Fahrzeugbatterie eine Spannung von bis zu 6V ab. Die verfügbare Klemmspannung im Bordnetz kann daher kurzzeitig auf 12V-6V=6V abfallen.

Zusätzlich zu den Spannungseinbrüchen aufgrund des Startens des Motors ergibt sich ein weiteres Problem aus der Verwendung von Impulslasten im Bordnetz des Fahrzeugs, wie z.B. einer elektrisch unterstützten Lenkung (EPS) oder einer elektrisch unterstützten Bremse, die zu starken Spannungsfluktuationen im Bordnetz des Fahrzeugs führen können. Diese Fluktuationen sind meistens bezüglich ihres zeitlichen Auftretens bzw. bezüglich ihrer Stärke nicht vorhersagbar.

Spannungseinbrüche haben Funktionseinbußen in diversen Steuergeräten zur Folge. Die Relevanz dieser Spannungseinbrüche erhöht sich insbesondere bei einer Batterielage hinten und Impulslasten, wie z.B. EPS vorn im Fahrzeug, da aufgrund langer Versorgungsleitungen von hinten nach vorn eine Spannung über diese abfallen kann.

Zur Spannungsstabilisierung wurde beispielsweise eine stabilisierte Klemme vorgeschlagen, wobei eine Fahrzeugbatterie mit dem Bordnetz verbunden bleibt, jedoch bei Spannungseinbruch nur eine Teilmenge von besonders spannungsempfindlichen Geräten über einen DC/DC-Wandler versorgt wird. Problematisch ist jedoch, dass der größte Teil der Steuergeräte und Aktoren ohne Funktionseinbußen bei einem Spannungseinbruch im Bordnetz, insbesondere beim Start, funktionieren muss.

Es wurde auch vorgeschlagen, zusätzlich zu einer Batterie eine zweite Stützbatterie oder einen Doppelschicht-Kondensator (SuperCap) für die Versorgung von Impulslasten vorzusehen, so dass ein Bordnetz stabilisiert und ein Spannungseinbruch vermieden werden kann. Beispielsweise kann zur Unterstützung des Bordnetzes ein SuperCap vorgeladen werden und dann parallel zur Fahrzeugbatterie geschaltet werden. Da die Zellenspannung von SuperCap und Batterie unterschiedlich sind, kommt es zu hohen Ausgleichsströmen zwischen SuperCap und Batterie, wobei der SuperCap Spannung bis zu 16V ausgesetzt ist, was sich negativ auf die Lebensdauer desselben auswirken kann.

Des Weiteren wurden Bordnetze vorgeschlagen, die zwei Batterien oder eine Batterie und einen SuperCap in verschiedenen von einander getrennten Bereichen aufweisen. Beispielsweise dient dabei eine erste Spannungsquelle, z.B. eine erste Batterie, zur Versorgung eines ersten Bereichs, der einen Starter, Generator und andere Verbraucher umfasst, und eine zweite Spannungsquelle, z.B. eine zweite Batterie, zur Versorgung eines zweiten Bereichs mit weiteren Verbrauchern. Es wird also eine zweite Batterie oder ein SuperCap mit vergleichbarer Spannungsversorgung benötigt, was nicht nur höhere Kosten verursacht, sondern auch das Gewicht eines Fahrzeugs erhöht und weiteren Raum im Fahrzeug einnimmt.

FR 2 853 154 A betrifft ein System zur Energieversorgung von Verbrauchern in einem Fahrzeug. Das System umfasst einen Generator, eine erste Spannungsquelle in Form einer Batterie, Verbraucher und eine Hilfsspannungsquelle. Die Hilfsspannungsquelle umfasst zwei Schalter, die als Thyristor ausgebildet sein können, eine zweite Spannungsquelle und eine Induktivität. Die Hilfsspannungsquelle weist eine Parallelschaltung auf mit dem ersten Schalter in einem ersten Zweig und dem zweiten Schalter und der zweiten Spannungsquelle in einem zweiten Zweig. Die Schalter können derart geschaltet werden, dass die erste und zweite Spannungsquelle in Reihe geschaltet sind.

Zusammenfassung der Erfindung Der Erfindung liegt die Aufgabe zugrunde, eine Schaltungsanordnung und ein Verfahren bereitzustellen, die in der Lage sind eine Spannung in einem Bordnetz eines Fahrzeugs mit einfachen Mitteln zu stützen, so dass eine Stabilisierung des Bordnetzes erreicht werden kann.

Diese Aufgabe wird durch eine Schaltungsanordnung zur Spannungsstützung eines Bordnetzes eines Fahrzeugs mit den Merkmalen des Anspruchs 1 und durch ein Steuerverfahren mit den Merkmalen des Anspruchs 15 gelöst. Vorteilhafte Ausführungsformen sind in den Unteransprüchen beschrieben.

Gemäß einer Ausführungsform der Erfindung umfasst die Schaltungsanordnung zur Spannungsstützung eines Bordnetzes eines Fahrzeugs, welche mit einer ersten Spannungsquelle und einem Verbraucher in Reihe verbindbar ist, ein Schaltelement mit einer Diodenfunktion, ausgebildet zum Annehmen eines ersten Betriebszustands mit einer Stromdurchlassrichtung und einer Stromsperrrichtung in entgegengesetzter Richtung zur Stromdurchlassrichtung und eines zweiten durchgeschalteten Betriebszustands . Die Schaltungsanordnung umfasst ferner einen Schalter und eine zweite Spannungsquelle, z.B. einen Doppelschicht-Kondensator oder eine Batterie, zum Bereitstellen von einer Spannung. Die Schaltungsanordnung ist als Parallelschaltung ausgebildet mit dem Schaltelement in einem ersten Zweig und dem Schalter und der zweiten Spannungsquelle in einem zweiten Zweig der Parallelschaltung, und ist ferner derart ausgebildet und mit der ersten Spannungsquelle und dem Verbraucher verbindbar, das in einem ersten Schaltzustand bei geschlossenem Schalter die erste und zweite Spannungsquelle in Reihe geschaltet sind zur Versorgung des Verbrauchers und so dass das Schaltelement mit Stromdurchlassrichtung von der ersten Spannungsquelle zu dem Verbraucher angeordnet ist.

Somit kann selbst durch eine kleine zweite Spannungsquelle, deren Spannung sich zu der Spannung einer ersten Spannungsquelle addiert, ein Bordnetz eines Fahrzeugs stabilisiert werden, was die Kosten zur Spannungsstützung reduziert sowie das Gewicht eines Fahrzeugs und den benötigten Bauraum verringert. Beispielsweise kann ein SuperCap mit nur zwei Zellen verwendet werden, wobei in herkömmlichen Vorrichtungen SuperCaps mit mindestens sechs Zellen benötigt werden.

Gemäß einem vorteilhaften Beispiel ist die Schaltungsanordnung derart ausgebildet und mit der ersten Spannungsquelle und dem Verbraucher verbindbar, dass in einem zweiten Schaltzustand bei offenem Schalter die erste Spannungsquelle in Reihe zu dem Verbraucher über das Schaltelement geschaltet ist zur Versorgung des Verbrauchers, und das Schaltelement mit der Durchlassrichtung von der ersten Spannungsquelle zu dem Verbraucher angeordnet ist. Somit kann der mindestens eine Verbraucher auch alleine von der ersten Spannungsquelle versorgt werden, falls die zweite Spannungsquelle entladen oder fehlerhaft ist.

Gemäß einem weiteren vorteilhaften Beispiel ist die Schaltungsanordnung derart ausgebildet, dass der Schalter in den ersten Schaltzustand geht und schließt, wenn die Spannung, insbesondere die Spannung der ersten Spannungsquelle, unter einen Schwellenwert fällt. Somit kann beispielsweise eine Steuereinheit bereitgestellt werden, die eine an der ersten Spannungsquelle oder an einer anderen Stelle des Bordnetzes gemessene Spannung erhält und bei Unterschreitung eines bestimmten Spannungswerts dem Schalter befiehlt zu schließen, um die zweite Spannungsquelle hinzuzuschalten zur Spannungsunterstützung.

Gemäß einem weiteren vorteilhaften Beispiel umfasst die Schaltungsanordnung eine dritte Spannungsquelle, die im zweiten Zweig in Reihe zu der zweiten Spannungsquelle schaltbar ist. Somit kann je nach Bedarf an Stützspannung eine weitere dritte Spannungsquelle hinzugeschaltet werden.

Gemäß einem weiteren vorteilhaften Beispiel umfasst die Schaltungsanordnung einen zweiten und dritten Schalter, die derart angeordnet und schaltbar sind, dass in dem ersten Schaltzustand bei geschlossenem ersten Schalter die erste, zweite und dritte Spannungsquelle in Reihe geschaltet sind zur Versorgung des einen oder mehreren Verbrauchers. Beispielsweise können die drei Schalter derart angeordnet und geschaltet werden, dass bei geschlossenem ersten Schalter, geöffnetem zweiten Schalter und geschlossenem dritten Schalter die erste, zweite und dritte Spannungsquelle in Reihe geschaltet sind und dass bei geschlossenem ersten Schalter und geschlossenem zweiten Schalter und geöffnete, dritten Schalter nur die erste und zweite Spannungsquelle in Reihe geschaltet sind zur Versorgung des Verbrauchers. Somit kann eine Schalterstellung je nach Stützspannungsbedarf eingestellt werden, so dass zusätzlich zur ersten Spannungsquelle auch die zweite oder zweite und dritte Spannungsquelle in Reihe zugeschaltet werden kann.

Gemäß einem weiteren vorteilhaften Beispiel umfasst die Schaltungsanordnung eine Ladeschaltung, die derart mit mindestens der zweiten Spannungsquelle verbunden ist, dass in einem zweiten Schaltzustand bei offenem Schalter die zweite Spannungsquelle aufladbar ist. Insbesondere ist die Ladeschaltung parallel geschaltet zu der mindestens zweiten Spannungsquelle. Somit kann eine zweite Spannungsquelle gemäß ihrer Spezifikationen aufgeladen werden.

Gemäß einem weiteren vorteilhaften Beispiel weist die Ladeschaltung einen getakteten Transistor, eine Spule und einen Kondensator zur Ladestrombegrenzung auf. Somit kann das Aufladen mit Ladestrom der mindestens zweiten Spannungsquelle je nach Bedarf gesteuert werden.

Gemäß einem weiteren vorteilhaften Beispiel ist das Schaltelement ausgebildet zum Annehmen des ersten Betriebszustands mit einer ersten Durchlassspannung größer als 0V und eines zweiten Betriebszustands mit einer zweiten Durchlassspannung zwischen 0V und der ersten Durchlassspannung, wobei bei der zweiten Durchlassspannung das Schaltelement durchgeschaltet ist. Somit wird ja nach Stellung des Schalters der passende Betriebszustand des Schaltelements angenommen, so dass ein Kurzschluss und eine Zerstörung des Schaltelements vermieden werden kann.

Gemäß einem weiteren vorteilhaften Beispiel ist das Schaltelement ein steuerbarer Halbleiterschalter, vorzugsweise Leistungshalbleiter.

Gemäß einer anderen Ausführungsform umfasst ein Bordnetz die oben beschriebene Schaltungsanordnung zur Spannungsstützung sowie die erste Spannungsquelle und mindestens einen Verbraucher.

Gemäß einem vorteilhaften Beispiel ist die Schaltungsanordnung in der Bordnetzschaltung zwischen der ersten Spannungsquelle und dem Verbraucher in Reihe angeordnet, wobei die Bordnetzschaltung bevorzugt einen unstabilisierten Bereich und einen stabilisierten Bereich aufweist und die Schaltungsanordnung in dem stabilisierten Bereich angeordnet ist. Somit ist es möglich Verbraucher mit verschiedenen Prioritäten verschiedenen Bereichen der Bordnetzschaltung zuzuordnen.

Gemäß einer anderen Ausführungsform umfasst ein Fahrzeug, insbesondere ein Automobil, die oben beschriebene Bordnetzschaltung.

Gemäß einer anderen Ausführungsform der Erfindung umfasst ein Steuerverfahren zur Spannungsstützung eines Bordnetzes eines Fahrzeugs mit einer ersten Spannungsquelle und einer in Reihe geschalteten Parallelschaltung aus einem Schaltelement mit Diodenfunktion in einem ersten Zweig und einem Schalter und einer zweiten Spannungsquelle in einem zweiten Bereich zur Versorgung eines nachgeschalteten Verbrauchers die folgenden Schritte: Schließen des Schalters in der Parallelschaltung, so dass die erste und zweite Spannungsquelle in Reihe geschaltet sind zur Versorgung des Verbrauchers, und Schalten des Schaltelements mit Diodenfunktion in einen ersten Betriebszustand mit einer Stromdurchlassrichtung von der ersten Spannungsquelle zu dem Verbraucher. Somit kann ein einfaches Steuerverfahren in einem Bordnetz eines Fahrzeugs realisiert werden, so dass das gesamte Bordnetz stabilisiert werden kann.

Weitere vorteilhafte Merkmale der Erfindung werden in der detaillierten Beschreibung der Ausführungsformen und in den angehängten Ansprüchen offenbart.

Kurze Beschreibung der Zeichnungen
Fig. 1 zeigt schematisch eine Schaltungsanordnung zur Spannungsstützung eines Bordnetzes eines Fahrzeugs gemäß einer Ausführungsform.
Fig. 2 zeigt ein Bordnetz mit einer Schaltungsanordnung gemäß einer weiteren Ausführungsform.
Fig. 3 zeigt ein Flussdiagramm, das die Schritte eines Verfahrens zum Steuern einer Spannungsstützung eines Bordnetzes eines Fahrzeugs gemäß einer weiteren Ausführungsform zeigt.
Fig. 4 zeigt ein detailliertes Beispiel eines Bordnetzes mit einer Schaltungsanordnung zur Spannungsstützung gemäß einer spezifischen Ausführungsform.
Fig. 5 zeigt ein weiteres detailliertes Beispiel eines Bordnetzes mit einer Ladeschaltung und einer Schaltungsanordnung zur Spannungsstützung gemäß einer weiteren spezifischen Ausführungsform.
Fig. 6A und 6B sind Diagramme, die das das Verhalten der Bordnetzspannung bei Verwendung der Schaltungsanordnung der beschriebenen Ausführungsformen zeigen.
Fig. 7 zeigt ein Beispiel einer speziellen Konfiguration des Schaltelements der Schaltanordnung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben. Dabei sind in verschiedenen Zeichnungen gleiche oder entsprechende Element jeweils mit den gleichen oder ähnlichen Bezugszeichen bezeichnet.

Die bevorzugten Ausführungsformen der Erfindung, die im Folgenden detailliert beschrieben werden, werden ausführlich mit Bezug auf Schaltungsanordnungen zur Spannungsstützung eines Bordnetzes eines Fahrzeugs und einem entsprechenden Verfahren beschrieben. Jedoch wird bemerkt, dass die folgende Beschreibung nur Beispiele enthält und nicht als die Erfindung einschränkend angesehen werden sollte.

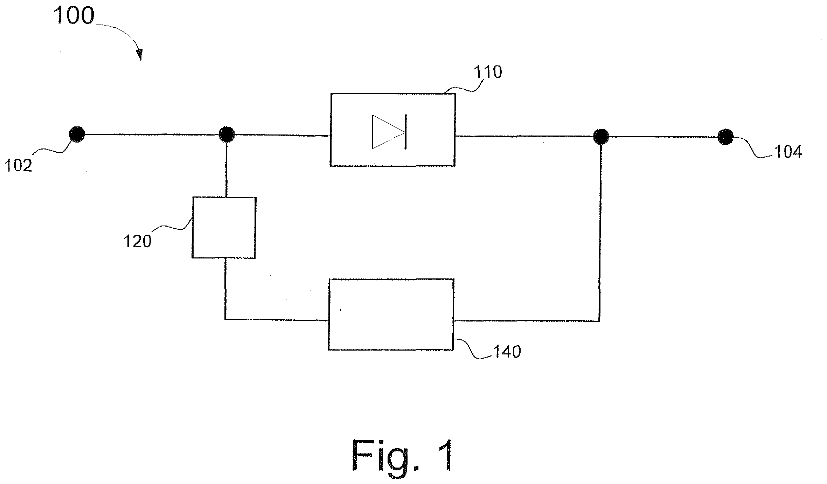

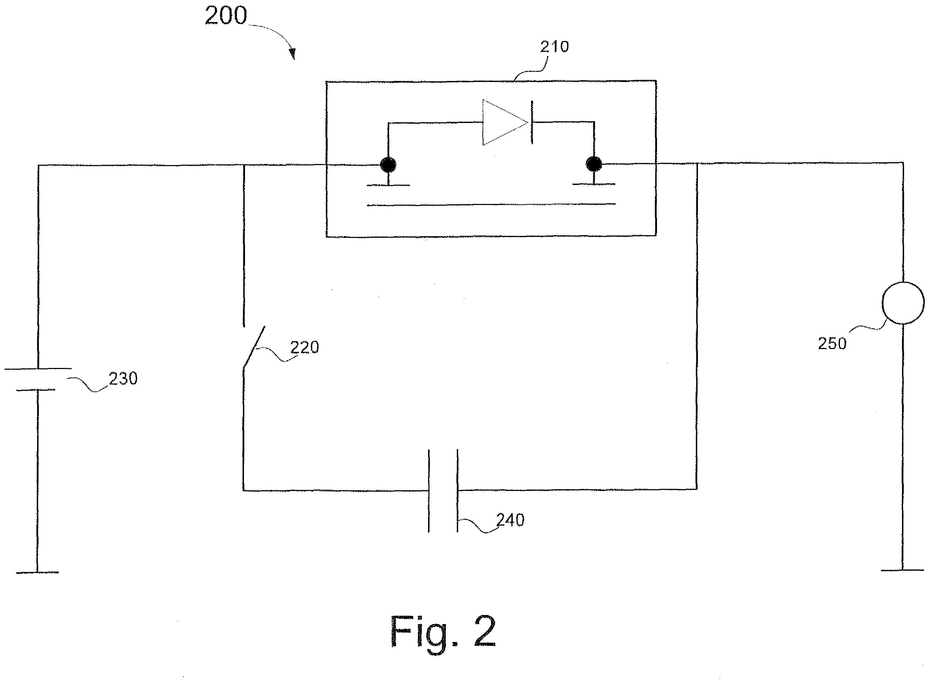

Fig. 1 zeigt schematisch eine Schaltungsanordnung 100 zur Stützung einer Spannung in einem Fahrzeugbordnetz. Die Schaltungsanordnung umfasst eine spannungsquelle 140 zum Bereitstellen von einer Spannung für ein Bordnetz, einen Schalter 120 und ein Schaltelement 110 mit einer Diodenfunktion. In Fig. 1 ist die Schaltungsanordnung 100 als Parallelschaltung ausgebildet. Das Schaltelement 110 befindet sich in einem ersten Zweig der Parallelschaltung und der Schalter 120 und die Spannungsquelle 140 befinden sich in einem zweiten Zweig der Parallelschaltung. Die Schaltungsanordnung 100 ist mit einem ersten Anschluss 102 versehen zur elektrischen Verbindung mit einer anderen Spannungsquelle und mit einem anderen Anschluss 104 zur elektrischen Verbindung mit einem Verbraucher, was mit Bezug auf Fig. 2 im Einzelnen unten beschrieben wird.

Durch diese Konfiguration können so zwei Spannungsquellen, in einem ersten Schaltzustand bei geschlossenem Schalter 120 in Reihe geschaltet werden zur Versorgung des an dem anderen Anschluss verbundenen Verbrauchers oder mehreren Verbrauchern. Das Schaltelement 110 mit der Diodenfunktion, die durch das Diodensymbol im Schaltelement 110 in Fig. 1 angedeutet ist, kann einen ersten Betriebszustand mit einer Stromdurchlassrichtung annehmen. Das Schaltelement 110 ist derart in der Schaltungsanordnung angeordnet, dass die Stromdurchlassrichtung von dem ersten Anschluss 102 zu dem anderen Anschluss 104 geht.

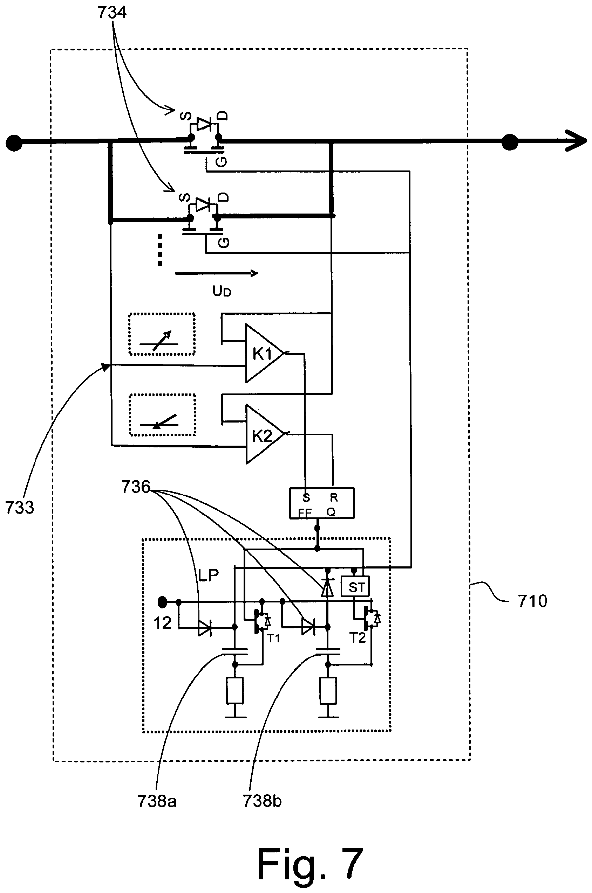

Im ersten Betriebszustand besitzt das Schaltelement mit der Diodenfunktion, die beschriebene Stromdurchlassrichtung sowie eine Stromsperrrichtung in entgegengesetzter Richtung. In einem zweiten Betriebszustand hingegen kann das Schaltelement 110 derart geschalten bzw. angesteuert werden, dass ein Stromfluss in beide Richtungen mit nur geringen Durchlassverlusten ermöglicht wird. Das Schaltelement 110 mit der Diodenfunktion kann daher als aktive Diode bezeichnet werden, die eine annährend ideale Diodenkennlinie annehmen kann und in dem zweiten Betriebszustand annähernd leistungslos betrieben werden kann. Bevorzugt werden dafür ein oder mehrere Leistungshalbleiter, z.B. Feldeffekttransistoren, wie z.B. MOSFETs verwendet, da bei normalen passiven Dioden eine Leistung über die Diode abfällt und diese bei Stromstärken im Bereich von 50A bis 200A nicht verwendbar sind. Ein konkretes Beispiel eines bevorzugten Schaltelements mit Diodenfunktion wird später mit Bezug auf Fig. 7 beschrieben.

Durch Annehmen des ersten Betriebszustands des Schaltelements 110 kann ein Stromfluss von rechts nach links in dem in Fig. 1 gezeigten Beispiel unterdrückt werden, so dass in dem ersten Schaltzustand bei geschlossenem Schalter 120 kein Kurzschluss erfolgt, wenn Strom von links nach rechts in Fig. 1, d.h. von der weiteren Spannungsquelle an Anschluss 102 zu einem Verbraucher, fließt. Andererseits wird in einem zweiten Schaltzustand bei offenem Schalter 120 die weitere mit dem Anschluss 102 verbindbare Spannungsquelle in Reihe zu dem mit dem anderen Anschluss 104 verbundenen Verbraucher über das Schaltelement 110 geschaltet, so dass der Verbraucher mit Strom bzw. elektrischer Energie versorgt werden kann. Somit wird der Verbraucher in dem ersten Schaltzustand bei geschlossenem Schalter mit Strom von zwei Spannungsquellen versorgt und in dem zweiten Schaltzustand bei offenem Schalter mit Strom von einer Spannungsquelle versorgt.

Fig. 2 zeigt eine Bordnetzschaltung 200 mit einer ersten Spannungsquelle 230, einem Verbraucher 250 und einer Schaltungsanordnung, die ähnlich zu der Schaltungsanordnung 100 von Fig. 1 ist. Die Schaltungsanordnung in Fig. 2 umfasst ein Schaltelement mit Diodenfunktion 210, einen Schalter 220 und eine zweite Spannungsquelle 240. In Fig. 2 ist die Spannungsquelle 140 von Fig. 1 als Kondensator 240 (zweite Spannungsquelle) dargestellt, der beispielsweise als Doppelschicht-Kondensator oder SuperCap mit mehreren SuperCap-Zellen ausgebildet sein kann.

Vorzugsweise handelt es sich bei dem Schaltelement 210 um einen Feldeffekttransistor, insbesondere ein Metalloxidhalbleiter-Feldeffekttransistor (MOSFET), z.B. ein Leistungs-MOSFET, wie in Fig. 2 gezeigt. Da sich Feldeffekttransistoren mit geringen Gate-Spannungen und minimaler Zeitverzögerung schalten lassen, kann somit schnell auf eine Änderung des Stromflusses über das Schaltelement oder starken Spannungsfluktuationen im Bordnetz reagiert werden. Durch die Verwendung von Halbleiterschaltern, wie einem Leistungs-MOSFET, für das Schaltelement wird eine schnelle Ansprech- bzw. Schaltzeit ermöglicht, die unterhalb der charakteristischen zeitskala der Spannungsfluktuationen eines Bordnetzes im Millisekundenbereich liegen. Die Halbleiterschalter weisen außerdem eine hohe Zyklenfestigkeit auf.

In dem Fall, dass der Schalter 220 geöffnet ist und Strom von der ersten Spannungsquelle 230 über das Schaltelement 210 an den Verbraucher 250 fließt, ist es erwünscht, das keine oder eine minimale Spannung an dem Schaltelement 210 abfällt. Falls für das Schaltelement 210 ein Leistungs-MOSFET verwendet wird, kann dies dadurch erreicht werden, dass eine Spannung am Gate des Leistungs-MOSFETs angelegt wird, so dass der Leitungs-MOSFET einen Betriebszustand annimmt, in dem eine Durchlassspannung, d.h. eine Spannung, die am Schaltelement abfällt, nahezu 0V ist. Dadurch wird der Feldeffekttransistor durchgeschaltet und Strom könnte in beide Richtungen fließen, wobei in dem Beispiel von Fig. 2 bei geöffnetem Schalter 220 nur Strom von der ersten Spannungsquelle 230 zum Verbraucher 250 fließt.

Falls nun der Schalter 220 geschlossen wird, da die Spannung im Bordnetz abfällt und die zweite Spannungsquelle 240 hinzugeschaltet werden soll, kann sich für eine kurze Zeit die Stromrichtung in dem Schaltelement 210 von rechts nach links ändern. Jedoch wird durch die Schaltung des Schaltelements 210, die im Einzelnen in Fig. 7 beschrieben wird, die Änderung sofort detektiert und die Spannung am Gate des Feldeffekttransistors geändert, so dass sich der Feldeffekttransistor wie eine Diode verhält. Wenn der Feldeffekttransistor dann die Diodenfunktion annimmt, geht er in einen Betriebszustand mit einer Durchlassspannung größer als 0V (wie bei einer normalen passiven Diode), in dem eine Stromdurchlassrichtung nur von der ersten Spannungsquelle 230 zu dem Verbraucher 250 erlaubt ist und daher eine Stromsperrrichtung in entgegengesetzter Richtung besteht, mit einem Stromfluss von wenig mehr als 0A in entgegengesetzter Richtung über das Schaltelement.

Wie später mit Bezug auf Fig. 7 beschrieben wird, erfolgt das Leiten oder Sperren des Schaltelements 210 autark durch ein über die Stromrichtung geführtes Öffnen und Schließen (ideales Diodenverhalten) und ist somit autark von der Ansteuerung des Schalters 220 im zweiten Zweig der Parallelschaltung. Sollte die Spannung der zweiten Spannungsquelle 240 auf 0V abgefallen sein, d.h. die zweite Spannungsquelle entladen sein, oder sollte diese Spannungsquelle beschädigt sein, so steht zur lückenlosen Versorgung des Verbrauchers auch bei geschlossenem Schalter 220 mindestens die Spannung der ersten Spannungsquelle 230 bei Versorgung über das Schaltelement in Durchlassrichtung zur Verfügung. Dadurch wird eine lückenlose Verfügbarkeit der Versorgung vor allem für sicherheitsrelevante Verbraucher gewährleistet.

Falls das Schaltelement 210 im Gegensatz zu den hier beschriebenen Ausführungsformen ohne Diodenfunktion, d.h. beispielsweise als Relais, ausgelegt wäre, müsste beim Schließen des Schalters 220 immer gewährleistet werden, dass das Relais sofort öffnet, um einen Kurzschluss zu vermeiden. Falls jedoch in diesem Fall die zweite Spannungsquelle 240 entladen oder fehlerhaft wäre, würde überhaupt kein Strom den Verbraucher 250 erreichen, so dass sicherheitsrelevante Verbraucher ausfallen würden, und lediglich die zweite Spannungsquelle 240 würde aufgeladen.

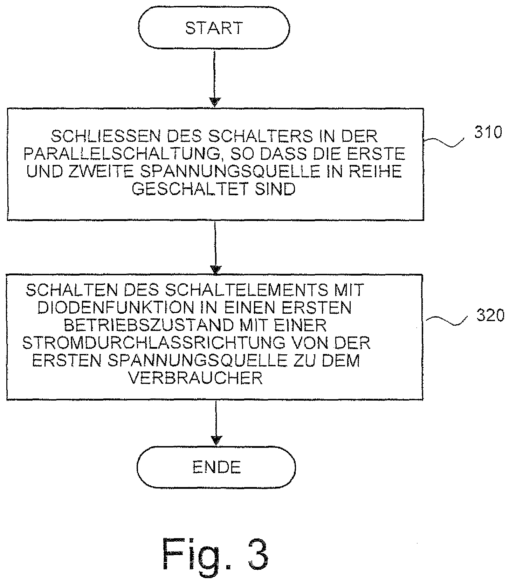

Im Folgenden wird der vorteilhafte Ablauf der Steuerung der Schaltungsanordnung in Figuren 1 und 2 mit Bezug auf Fig. 3 in einem Flussdiagramm beschrieben. In einem ersten Schritt 310 wird der Schalter 220 in der Parallelschaltung der Schaltungsanordnung geschlossen, so dass die erste und zweite Spannungsquelle in Reihe geschaltet sind. Wie oben bemerkt, kann dies daher folgen, dass bei einem Messen der Spannung der ersten Spannungsquelle diese unter einen Schwellenwert zur hinreichenden Versorgung der nachgeschalteten Verbraucher fällt und ein Zuschalten einer weiteren Spannungsquelle erwünscht ist.

Wie bereits erwähnt muss spätestens jetzt, wenn sich auf der rechten Seite des Schaltelements 210 in Fig. 2 eine höhere Spannung aufbaut als die Spannung der ersten Spannungsquelle 230, das Schaltelement seinen Betriebszustand mit Diodenfunktion annehmen, so dass kein Strom von rechts nach links über das Schaltelement 210 in Fig. 2 fließen kann. Wie später mit Bezug auf Fig. 7 dargestellt, lässt sich dies automatisch durch eine Komparatorschaltung erreichen, die einen Nulldurchgang des Stroms, d.h. eine Stromrichtungsumkehr, detektiert und das Schaltelement 210 umschaltet.

Dies wird in Schritt 320 der Fig. 3 beschrieben, in dem das Schaltelement mit Diodenfunktion in einen ersten Betriebszustand mit einer Stromdurchlassrichtung von der ersten Spannungsquelle. 230 zu dem Verbraucher 250 geschaltet wird.

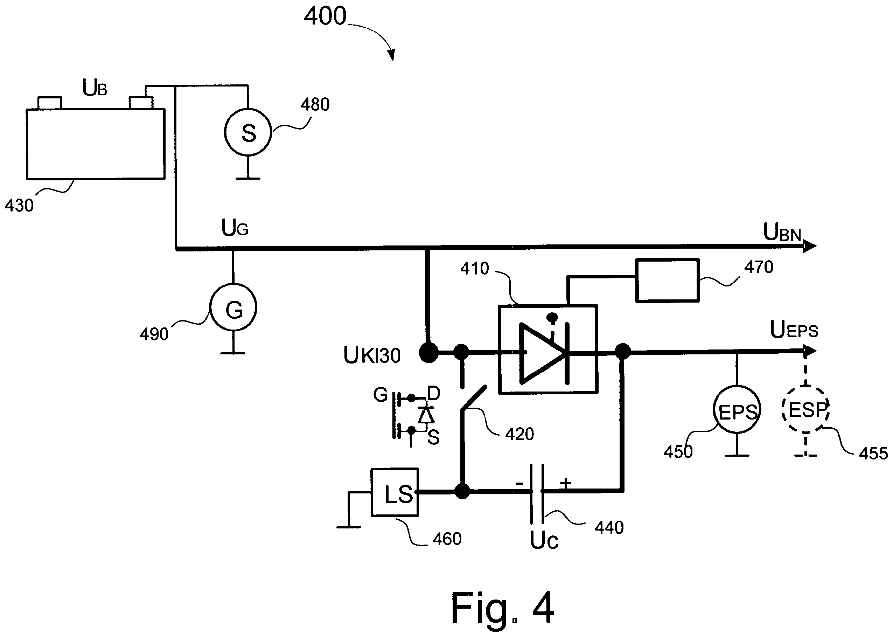

Im Folgenden wird in Fig. 4 ein konkretes Beispiel einer Bordnetzschaltung 400 mit einer Schaltungsanordnung, ähnlich zu der in Fig. 1 und Fig. 2 beschriebenen, gezeigt.

Die Bordnetzschaltung 400 in Fig. 4 umfasst eine Schaltungsanordnung mit einem Schaltelement 410, einem Schalter 420 und einer Spannungsquelle 440, was im Wesentlichen der Schaltungsanordnung von Fig. 1 und Fig. 2 entspricht und diese Schaltungsanordnung oder einzelne Elemente derselben könnten ausgetauscht werden. Der Schalter 420 ist in Fig. 4 als steuerbarer Halbleiterschalter, vorzugsweise Leistungshalbleiter, ausgebildet, wie es in Fig. 4 durch die Transistorschaltung angedeutet ist.

Des Weiteren wird in der Bordnetzschaltung 400 eine Ladeschaltung 460 schematisch gezeigt, die einerseits mit der Spannungsquelle 440 elektrisch verbunden ist und andererseits geerdet ist. Das Schaltelement 410 ist mit einer Steuerung 470 verbunden, die beispielsweise eine Spannung an das Gate des Schaltelements 410 anlegen kann, wenn dieses als Feldeffekttransistor ausgelegt ist und wird genauer mit Bezug auf Fig. 7 später beschrieben.

Ferner umfasst das Bordnetz eine Batterie 430, einen Starter 480, einen Generator 490 und mehrere Verbraucher, wobei als Beispiel eine elektronisch unterstützte Lenkung (EPS) 450, ein elektronisches Stabilitätsprogramm (ESP) 455 und ein Bordcomputer 590 dargestellt sind.

Wie aus Fig. 4 ersichtlich, ist die Schaltungsanordnung zwischen der Batterie 430, welche eine erste Spannungsquelle darstellt, und den Verbrauchern 450, 455 in Reihe angeordnet. Die Schaltungsanordnung ist in der Bordnetzschaltung 400 in einem Bereich angeordnet, dessen Verbraucher, beispielsweise EPS 450 und ESP 455, durch die Schaltungsanordnung, und insbesondere durch die Spannungsquelle 440, gestützt werden können. Dieser Bereich erstreckt sich von U_{Kl30} bis zu den Verbrauchern in Fig. 4 und wird als stabilisierter Bereich U_{EPS} bezeichnet. Zudem umfasst die Bordnetzschaltung 400 einen weiteren unstabilisierten Bereich, der mit U_{BN} bezeichnet ist und auf der Spannung des Bordnetzes ohne Spannungsstützung durch die Schaltungsanordnung liegt.

In dem unstabilisierten Bereich werden beispielsweise Verbraucher angeordnet, die nicht sicherheitsrelevant sind, wie z.B. eine Sitz- oder Nackenheizung und deren Ausfall bei einem Start des Fahrzeugs oder anderem Spannungseinbruch, z.B. beim Zuschalten von EPS oder ESP, keine weiteren Konsequenzen für die Fahrtauglichkeit des Fahrzeugs hat.

Sicherheitsrelevante Verbraucher im Bordnetz eines Fahrzeugs sind beispielsweise, wie bereits erwähnt, eine elektrisch unterstützte Lenkung (EPS) oder eine elektrisch unterstützte Bremse, verschiedene Sensoren und Anzeigeelemente, z.B. Warn-und Kontrollleuchten, sowie einige Aktoren und Elektromotoren, wobei weniger sicherheitsrelevante Verbraucher Leuchten für Innenbeleuchtungssysteme darstellen.

Die Batterie 430 liefert elektrische Energie für das Bordnetz, und insbesondere für den Starter 480 für einen Warmstart oder einen Kaltstart.

Der Starter 480 bzw. Anlasser, der in Fig. 4 mit der Batterie 430 verbunden ist, initiiert Rotationsbewegungen des Motors bzw. Verbrennungsmotors des Fahrzeugs, bevor sich dieser selber antreiben kann. Der Starter ist beispielsweise ein elektrischer Motor.

Der Generator 490 in Fig. 4 wandelt mittels magnetischer Induktion die Bewegungsenergie eines Fahrzeugs im Betrieb in elektrische Energie um. Der Generator 490 ist beispielsweise eine Lichtmaschine, die die Verbraucher im Bordnetz mit elektrischer Energie versorgt und die Spannungsquellen, wie die Batterie 430 und Kondensator 440 auflädt.

Die Batterie 430 besitzt eine begrenzte Leistung und ist daher keine ideale konstante Spannungsquelle, so dass eine konstante Spannungsversorgung des Bordnetzes nicht immer durch die Batterie alleine aufrechterhalten werden kann, wenn zu viele Verbraucher gleichzeitig zugeschaltet werden oder ein hoher Spannungseinbruch durch Betätigung des Starters 480 erfolgt.

Wenn beispielsweise die Spannung im Bordnetz, insbesondere die Spannung der Batterie 430 unter 11,8V fällt, wird der Schalter 420 geschlossen und die Batterie 430 und der Kondensator 440 werden in Reihe geschaltet zur Versorgung der Verbraucher im stabilisierten Bereich. Wie vorher beschrieben, verhindert das Schaltelement 410 nach dem Schließen des Schalters 420, dass die Schaltungsanordnung kurzgeschlossen wird. Ist die Spannung der Batterie 430 wieder über beispielsweise 11,8V, was hinreichend für die Versorgung der nachgeschalteten Verbraucher ist, so wird der Schalter 420 wieder geöffnet und die Versorgung der Verbraucher im stabilisierten Bereich erfolgt nur über die Batterie 430 und das Schaltelement 410 in Durchlassrichtung.

Bei geöffnetem Schalter 420 kann dann der Kondensator 440 über die Ladeschaltung 460 wieder aufgeladen werden.

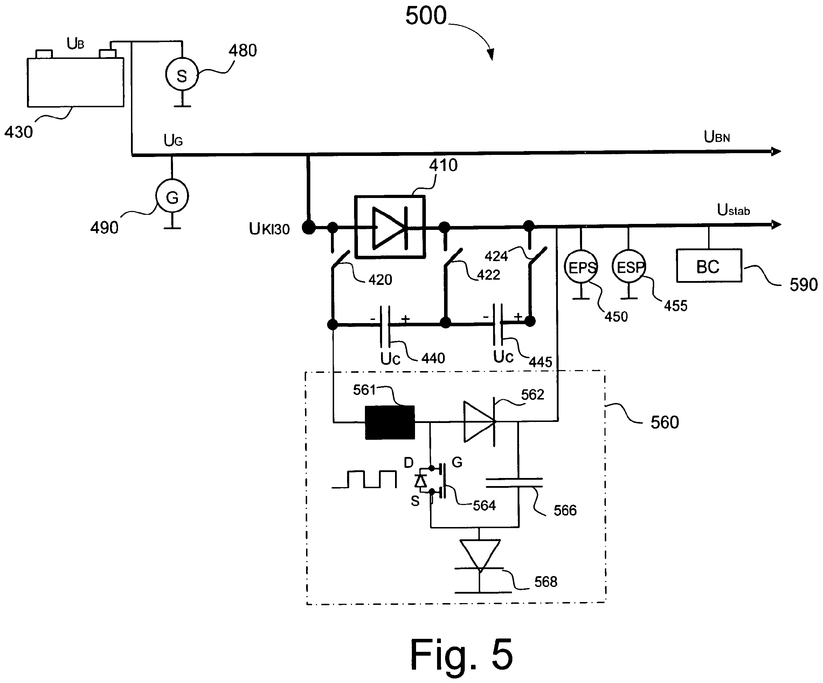

Die Ladeschaltung wird nun genauer mit Bezug auf Fig. 5 beschrieben, in der eine Bordnetzschaltung 500 dargestellt ist, in der die gleichen Elemente wie in Fig. 4 mit den gleichen Bezugszeichen bezeichnet sind, so dass eine genauerer Beschreibung dieser Elemente weggelassen werden kann.

In Fig. 5 ist die Ladeschaltung 560 im Detail dargestellt, die parallel zu dem Kondensator 440 verbunden ist, der die zweite Spannungsquelle darstellt. Ferner ist in Fig. 5 eine dritte Spannungsquelle durch den Kondensator 445 dargestellt, der in dem zweiten Zweig der Parallelschaltung der Schaltungsanordnung in Reihe zu der zweiten Spannungsquelle schaltbar ist. Mehrere Schalter 420, 422 und 424 sind vorhanden, um verschiedene Schaltzustände zu realisieren. Beispielsweise können die Kondensatoren 440 und 445 durch die Ladeschaltung 560 aufgeladen werden, wenn der erste Schalter 420 und der zweite Schalter 422 offen sind und der dritte Schalter 424 geschlossen ist. Andererseits kann auch nur der Kondensator 440 aufgeladen werden, wenn der erste Schalter offen ist und der zweite Schalter geschlossen ist.

Zur Aufladung der Kondensatoren 440 und 445 weist die Ladeschaltung einen getakteten Transistor 564, eine Spule 561 und einen Kondensator 566 zur Ladestrombegrenzung auf. Je nach Taktung des Transistors 564 kann der Strom begrenzt werden. Des Weiteren sind zwei Dioden 562 und 568 gezeigt, wobei die Diode 568 geerdet ist.

Die Verwendung von zwei Kondensatoren, die bevorzugt SuperCap-Zellen darstellen, aber auch durch Batteriezellen ersetzt werden können, ist insbesondere vorteilhaft, wenn verschiedene Spannungseinbrüche verschiedener Höhe im Bordnetz vorkommen können.

Beispielsweise kann bei geringen Spannungsfluktuationen, wenn die Bordnetzspannung unter einen Schwellenwert fällt durch Zuschalten eines Verbrauchers, es genügen, dass nur der Kondensator 440 in Reihe zu der Batterie 430 geschalten wird um die Spannung des Bordnetzes zu stützen und zu stabilisieren. In diesem Fall werden der erste und der zweite Schalter 420 und 422 geschlossen und der dritte Schalter 424 wird geöffnet, so dass die erste und zweite Spannungsquelle in Reihe geschaltet sind zur Versorgung der Verbraucher. Jedoch kann die Stützspannung des Kondensators 440 bei einem Starten des Starters 480 nicht ausreichend sein um die Bordnetzspannung zu stützen, da der Starter zum Losreißen des Motors bis zu 800A Strom zieht, wodurch die verfügbare Klemmspannung im Bordnetz kurzfristig auf bis ca. 6V abfallen kann. Hier bietet es sich an, dass zusätzlich zur ersten und zweiten Spannungsquelle der Kondensator 445 als dritte Spannungsquelle in Reihe geschaltet wird, durch Schließen des ersten Schalters 420, Öffnen des zweiten Schalters 422 und Schließen des dritten Schalters 424.

In Fig. 5 ist der erste Schalter ein steuerbarer Halbleiterschalter, vorzugsweise ein Leistungshalbleiter, der zweite Schalter ein bidirektional sperrender Halbleiterschalter, vorzugsweise eine Anordnung von Leistungshalbleiterschaltern und der dritte Schalter auch ein bidirektional sperrender Halbleiterschalter, vorzugsweise eine Anordnung von Leistungshalbleitern.

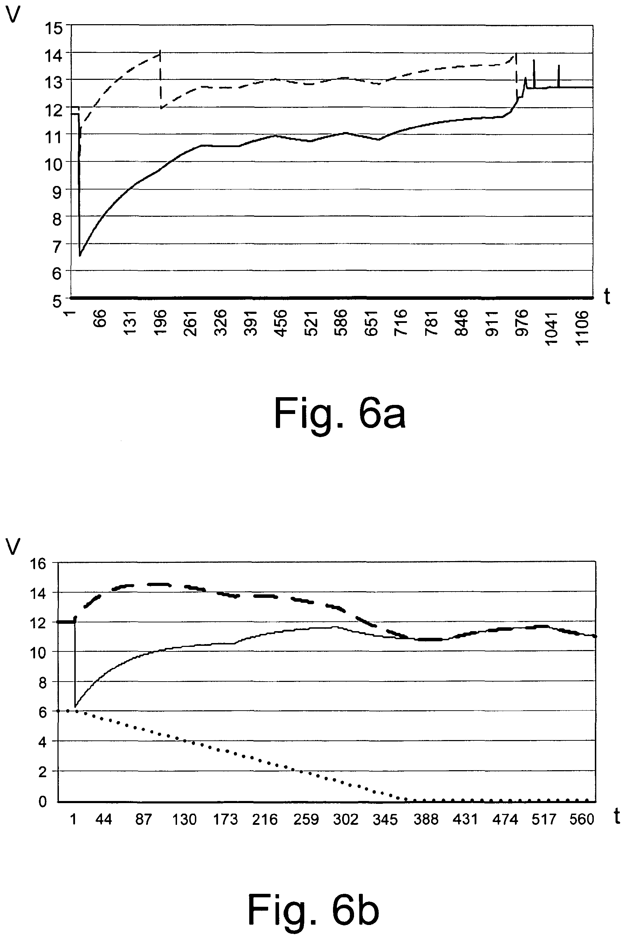

Fig. 6a zeigt ein Diagramm, das das Verhalten der Spannung im Bordnetz in Abhängigkeit der Zeit zeigt.

Auf der y-Achse ist die Spannung in Volt (V) aufgetragen und auf der x-Achse die Zeit in willkürlichen Einheiten. In dem Beispiel in Fig. 6a ist ein Beispiel eines Spannungsverlaufs der Batterie (durchgezogene Linie) und des Spannungsverlaufs im stabilisierten Bereich in Fig. 5 (gestrichelte Linie) gezeigt. In der Batteriespannung ist ein großer Spannungsabfall von über 5V ersichtlich, der beispielsweise vom Starten des Starters 480 herrührt. Dieser Spannungsabfall wird im Bordnetz gemessen und die Kondensatoren 440 und 445 werden zugeschaltet, so dass wie in Fig. 6a durch die gestrichelte Linie gezeigt, im stabilisierten Bereich eine Spannung von bis zu 14V vorliegt. Wenn nun die Batteriespannung langsam zu ihrem Anfangswert zurückkehrt, hier beispielsweise 10V, wird der Kondensator 445 abgeschaltet, so dass die Spannung im stabilisierten Bereich auf 12V fällt. Nach Ablauf einer weiteren Zeit und Rückkehr der Spannung der Batterie kann auch die zweite Spannungsquelle, d.h. der Kondensator 440 abgeschaltet werden, d.h. der Schalter 420 wird geöffnet und die Spannung der Batterie stimmt mit der Spannung im stabilisierten Bereich überein, wie in Fig. 6a gezeigt.

Fig. 6b zeigt auch ein Diagramm, das den Spannungsverlauf in einem Bordnetz mit Stützkondensator zeigt. Hier wird wieder durch die durchgezogene Linie die Spannung der Batterie gezeigt, die von ca. 12V auf 6V abfällt, wobei dann ein Kondensator (oder mehrere einzelne Zellen) mit 6V zugeschaltet wird (gepunktete Linie), der langsam seine Ladung abgibt und dadurch die Spannung im Gesamtnetz (gestrichelte Linie) auf einem Wert um 12V aufrecht erhält.

Je nach Bordnetzlast und Startspannungseinbruch ergibt sich somit eine Spannungsüberhöhung oder -verringerung im Bordnetz. Über eine intelligente Regelung kann die Vorladung eines Kondensators, z.B. SuperCaps, derart geregelt werden, dass die Spannung im Bereich der üblichen Bordnetzspannung von 12V bis 15V aufrecht erhalten wird. Dazu wird die Bordnetzlast während eines Stopp-Zykluses gemessen und Energiemanagement sorgt dafür, dass sich während des Stopp-Zykluses keine großen Änderungen des Bordnetzstroms ergeben.

Beispielsweise können zwei Zellen a 310F in Reihe (C_{gesamt}= 155F) für einen SuperCap verwendet werden, was diesen erheblich kleiner macht als in anderen Anwendungen. Bei bekannten Anwendungen werden sechs 660F Zellen in Reihe geschaltet, wodurch sich somit die Kosten, die Größe und das Gewicht des SuperCaps auf einen Bruchteil reduzieren lassen.

Im Folgenden wird ein Schaltungsbeispiel für ein Schaltelement, wie das Schaltelement 110 in Fig. 1, 210 in Fig. 2 oder 410 in Fig. 4 beschrieben.

Wie oben beschrieben, ist das steuerbare Schaltelement beispielsweise als aktive Diode ausgelegt und hat mehrere Zustände, wie z.B. den beschriebenen ersten Betriebszustand und den zweiten Betriebszustand. In dem ersten Betriebszustand arbeitet es im Wesentlichen wie eine Diode (Diodenfunktion), d.h. eine Durchlassrichtung wird vorgegeben, in der das Schaltelement Strom durchlässt und in der anderen Richtung wirkt es wie ein Isolator. In dem zweiten Betriebszustand kann das Schaltelement derart geschaltet werden, dass es sich wie ein Leiter verhält, d.h. Strom kann je nach den anliegenden Potentialen in beide Richtungen fließen.

Das Schaltelement 710 in Fig. 7 wird als aktive Diode verwendet und besteht insbesondere aus einer Parallelschaltung von mehreren Leistungs-MOSFETs 437, die invers betrieben werden. Die Stromrichtung im Durchlassbererch ist bei dieser Schaltung also Source nach Drain. Die Leistungs-MOSFETs sind beispielsweise n-Kanal-MOSFETs mit einem sehr niedrigen Widerstand von 1 oder 2 mΩ. In der Richtung von Source nach Drain können die Leistungs-MOSFETs nicht sperren, da über die intrinsischen Dioden ein Strom fließt. Da für größere Ströme die Verluste über die intrinsischen Dioden so groß werden können, dass die MOSFETs zerstört werden können, werden die MOSFETs bevorzugt für diese Stromrichtung durch Anlegen einer Spannung an die Gates (G) durchgeschaltet.

Bevorzugt werden sechs parallel geschaltete Leistungs-MOSFETs 734 verwendet, von denen in Fig. 3 jedoch nur zwei gezeigt sind. Durch den geringen Widerstand kann problemlos ein Strom von 200A über die Parallelschaltung der sechs MOSFETs 734 fließen, wobei jeder MOSFET ein Strom von ca. 33A trägt.

Des Weiteren weist das Schaltelement 710 eine Kontroll- und Steuerschaltung 733 auf mit zwei Komparatoren K1 und K2, einem Flip-Flop-Element FF und einer Ladungspumpe LP. Die Ladungspumpe LP beinhaltet eine Schmitt-Trigger ST, zwei Kondensatoren 738a und 738b, drei Dioden 736 und zwei MOSFETs T1 und T2.

In einem Ruhezustand fließt nur ein geringer Bordnetzstrom (<5A) über die intrinsischen Dioden der Leistungs-MOSFETs 734. Steigt der Strom über einen vorgegebenen Schwellenwert (ungefähr 5A) an, so schaltet der Komparator K1 der Kontroll- und Steuerschaltung 733 wegen der Überschreitung der über den intrinsischen Dioden 734 abfallenden Schwellenspannung U_{D} auf 1. Das auf 1 gesetzte Flip-Flop FF aktiviert die Ladungspumpe LP. Da bei einem Stromanstieg die Leistungs-MOSFETs 734 sehr schnell durchgeschaltet werden müssen, um eine Beschädigung oder Zerstörung der intrinsischen Dioden der MOSFETs zu verhindern, ist eine extrem kurze Ansprechzeit der Ladungspumpe LP notwendig. Dieses kann beispielsweise dadurch erreicht werden, dass der geladene Kondensator 738a über einen Transistor T1 auf die Betriebsspannung des Bordnetzes gehoben wird, um die Gates G der Leistungs-MOSFETs 734 durchzuschalten. Parallel dazu kann über einen Schmitt-Trigger ST und einen zweiten über den Transistor T2 geschalteten Kondensator 738b ein kontinuierliches Ladungspumpen erfolgen um einem Spannungsabfall auf der Gate-Leitung durch Leckströme entgegenzuwirken. Die über den intrinsischen Dioden abfallende Spannung sinkt unter die Schwellenspannung des Komparators K1, wodurch der Komparatorausgang wieder auf 0 zurückgeht. Die Gates G der Leitungs-MOSFETs 734 bleiben aber durchgeschaltet, da das Flip-Flop FF den Zustand 1 beibehält.

Das Sperren der Leistungshalbleiter bei Stromumkehr erfolgt über den Komparator K2. Dieser erkennt den Nulldurchgang der Spannung über die Leistungshableiter, wenn der Strom über die Leistungshalbleiter seinen Nulldurchgang hat. Bei der Spannung 0V geht der Ausgang des Komparators K2 auf 1 und setzt das Flip-Flop zurück. Mit diesem Übergang des Ausgang des Flip-Flops werden die Transistoren T1 und T2 ausgeschaltet. Die über die Kondensatoren 738a und 738b an die Gates G der Leistungs-MOSFETs 734 angelegte Spannung geht somit auf 0 zurück, und die Leistungs-MOSFETs 734 werden gesperrt. Somit nimmt außer dem Komparator K2 kein Schaltungsteil mehr Ruhestrom auf. Da die Leistungs-MOSFETs 734 gesperrt sind und die Durchlassrichtung der der intrinsischen Dioden der Leistungs-MOSFETs 734 der Stromrichtung von beispielsweise der Batterie 430 zu den Verbrauchern entspricht, wird eine Umkehr des Stroms, d.h. ein Stromfluss, von den Verbrauchern zur Batterie 430, unterbunden. Das Schaltelement 710 wirkt somit wie eine Diode, d.h. ein Schaltelement mit einer Diodenfunktion, aber ohne die Verluste über die Durchlassspannung im zweiten Betriebszustand wie bei konventionellen passiven Dioden. Dies bedeutet, dass in dem ersten Betriebszustand die erste Durchlassspannung größer als 0V ist und im zweiten Betriebszustand die zweite Durchlassspannung zwischen 0 und der ersten Durchlassspannung liegt. In dem ersten Betriebszustand ist das Schaltelement also in einer Stromrichtung von links nach rechts in Fig. 7 mit einer Durchlassspannung von nur wenig mehr als 0V (beispielsweise 0.5V) leitend und in der entgegen gesetzten Richtung sperrt das Schaltelement mit einem Stromfluss von wenig mehr als 0A. Anders ausgedrückt, ist der Widerstand des Schaltelements im zweiten Betriebszustand fast 0 Ω und im ersten Betriebszustand für Strom von links nach rechts leicht größer als im zweiten Betriebszustand und für Strom von rechts nach links in Fig. 7 geht er gegen unendlich.

Falls nun bei den in den Figuren 1, 2, 4 und 5 gezeigten Beispielen der Schalter 120, 220, 420 wieder geöffnet wird und sich die Stromrichtung wieder von Batterie zu Verbraucher dreht, kann die Kontroll- und Steuerschaltung 733 diese Änderung erkennen und die Leistungs-MOSFETs 734 werden in einem zweiten Betriebszustand mit einer zweiten Durchlassspannung zwischen 0V und der ersten Durchlassspannung durchgeschaltet.

Somit kann das Schaltelement 710 mit der beschriebenen Steuerung autark von einer Steuerung der Schalter 120, 220, 420, 422, 424 arbeiten, die zur Spannungsunterstützung bei einem Abfall in der Bordnetzspannung die zweite und dritte Spannungsquelle zuschaltet.

Bevorzugt können die oben beschriebenen Schaltungsanordnungen und Bordnetzschaltungen in einem Fahrzeug, insbesondere in einem Automobil, zur Spannungsstützung und dadurch Stabilisierung des Bordnetzes verwendet werden.

Aus der vorhergehenden Beschreibung erkennt der Fachmann, dass verschiedene Modifikationen und Variationen der Schaltungsanordnungen, Bordnetzschaltungen und des Verfahrens durchgeführt werden können, ohne den Umfang der Erfindung zu verlassen.

Ferner wurde die Erfindung mit Bezug auf bestimmte Beispiele beschrieben, die jedoch nur zum verbesserten Verständnis der Erfindung dienen sollen, und diese nicht einschränken sollen.

Der Fachmann erkennt auch sofort, dass viele verschiedene Kombinationen der Elemente zur Ausführung der vorliegenden Erfindung verwendet werden können. Deshalb wird der wahre Umfang der Erfindung durch die folgenden Ansprüche gekennzeichnet.

## Patentansprüche

1. Schaltungsanordnung zur Spannungsstützung eines Bordnetzes eines Fahrzeugs, welche mit einer ersten Spannungsquelle und einem Verbraucher in Reihe verbindbar ist, umfassend:
ein Schaltelement (110) mit einer Diodenfunktion, ausgebildet zum Annehmen eines ersten Betriebszustands mit einer Stromdurchlassrichtung und eines zweiten durchgeschalteten Betriebszustands;
einen Schalter (120); und
eine zweite Spannungsquelle (140) zum Bereitstellen von einer Spannung, wobei
die Schaltungsanordnung als Parallelschaltung ausgebildet ist mit dem Schaltelement (110) in einem ersten Zweig und dem Schalter (120) und der zweiten Spannungsquelle (140) in einem zweiten Zweig der Parallelschaltung; und
die Schaltungsanordnung derart ausgebildet ist und mit der ersten Spannungsquelle und dem Verbraucher verbindbar ist, dass in einem ersten Schaltzustand bei geschlossenem Schalter die erste und zweite Spannungsquelle (140) in Reihe geschaltet sind zur Versorgung des Verbrauchers und das Schaltelement (110) mit der Stromdurchlassrichtung von der ersten Spannungsquelle zu dem Verbraucher angeordnet ist.

2. Schaltungsanordnung nach Anspruch 1, wobei die Schaltungsanordnung derart ausgebildet ist und mit der ersten Spannungsquelle und dem Verbraucher verbindbar ist, dass in einem zweiten Schaltzustand bei offenem Schalter die erste Spannungsquelle in Reihe zu dem Verbraucher über das Schaltelement geschaltet ist zur Versorgung des Verbrauchers, und das Schaltelement mit der Durchlassrichtung von der ersten Spannungsquelle zu dem Verbraucher angeordnet ist.

3. Schaltungsanordnung nach Anspruch 1 oder 2, wobei
die Schaltungsanordnung derart ausgebildet ist, dass der Schalter in den ersten Schaltzustand geht und schließt, wenn die Spannung der ersten Spannungsquelle unter einen Schwellenwert fällt.

4. Schaltungsanordnung nach einem der Ansprüche 1 bis 3, ferner umfassend
eine dritte Spannungsquelle, die im zweiten Zweig in Reihe schaltbar ist zu der zweiten Spannungsquelle.

5. Schaltungsanordnung nach Anspruch 4, ferner umfassend
einen zweiten und dritten Schalter, die derart angeordnet und schaltbar sind, dass in dem ersten Schaltzustand bei geschlossenem ersten Schalter die erste, zweite und dritte Spannungsquelle in Reihe geschaltet sind zur Versorgung des Verbrauchers.

6. Schaltungsanordnung nach einem der Ansprüche 1 bis 5, ferner umfassend
eine Ladeschaltung, die derart mit mindestens der zweiten Spannungsquelle verbunden ist, dass in einem zweiten Schaltzustand bei offenem Schalter die zweite Spannungsquelle aufladbar ist.

7. Schaltungsanordnung nach Anspruch 6, wobei
die Ladeschaltung parallel geschaltet ist zu der mindestens zweiten Spannungsquelle.

8. Schaltungsanordnung nach Anspruch 6 oder 7, wobei
die Ladeschaltung zur Ladestrombegrenzung mindestens eines aufweist aus einem getakteten Transistor, einer Spule und einem Kondensator.

9. Schaltungsanordnung nach einem der Ansprüche 1 bis 8, wobei
das Schaltelement ausgebildet ist zum Annehmen des ersten Betriebszustands mit einer ersten Durchlassspannung größer als 0V und des zweiten Betriebszustands mit einer zweiten Durchlassspannung zwischen 0V und der ersten Durchlassspannung, wobei bei der zweiten Durchlassspannung das Schaltelement durchgeschaltet ist.

10. Schaltungsanordnung nach einem der Ansprüche 1 bis 9, wobei
das Schaltelement ein steuerbarer Halbleiterschalter, vorzugsweise Leistungshalbleiter, ist.

11. Bordnetzschaltung mit der Schaltungsanordnung nach einem der Ansprüche 1 bis 10, ferner umfassend
die erste Spannungsquelle, und
den Verbraucher.

12. Bordnetzschaltung nach Anspruch 11, wobei
die Schaltungsanordnung zwischen der ersten Spannungsquelle und dem Verbraucher in Reihe angeordnet ist.

13. Bordnetzschaltung nach Anspruch 11 oder 12, wobei
die Bordnetzschaltung einen unstabilisierten Bereich und einen stabilisierten Bereich aufweist und die Schaltungsanordnung in dem stabilisierten Bereich angeordnet ist.

14. Fahrzeug mit der Bordnetzschaltung nach einem der Ansprüche 11 bis 13.

15. Steuerverfahren zur Spannungsstützung eines Bordnetzes eines Fahrzeugs mit einer ersten Spannungsquelle und einer in Reihe geschalteten Parallelschaltung aus einem Schaltelement mit Diodenfunktion in einem ersten Zweig und einem Schalter und einer zweiten Spannungsquelle in einem zweiten Zweig zur Versorgung eines nachgeschalteten Verbrauchers, umfassend die Schritte:
Schließen des Schalters in der Parallelschaltung, so dass die erste und zweite Spannungsquelle in Reihe geschaltet sind zur Versorgung des Verbrauchers; und
Schalten des Schaltelements mit Diodenfunktion von einem zweiten durchgeschalteten Betriebszustands in einen ersten Betriebszustand mit einer Stromdurchlassrichtung von der ersten Spannungsquelle zu dem Verbraucher.

## Claims

1. Circuit arrangement for the voltage support of an on-board electrical system of a vehicle, which can be connected in series with a first voltage source and with a load, said circuit arrangement comprising:
a switching element (110) having a diode function, configured to assume a first operating state having a current flow direction and to assume a second switched-on operating state;
a switch (120); and
a second voltage source (140) for supplying a voltage, wherein
the circuit arrangement is configured as a parallel circuit having the switching element (110) in a first branch and having the switch (120) and the second voltage source (140) in a second branch of the parallel circuit; and
the circuit arrangement is configured and can be connected to the first voltage source and to the load in such a way, that in a first switching state, when the switch is closed, the first and second voltage source (140) are connected in series for the purpose of supplying the load with power and the switching element (110) is arranged having the current flow direction from the first voltage source to the load.

2. Circuit arrangement according to Claim 1, wherein the circuit arrangement is configured and can be connected to the first voltage source and to the load in such a way that, in a second switching state, when the switch is open, the first voltage source is connected in series with the load by way of the switching element for the purpose of supplying the load with power, and the switching element is arranged having the flow direction from the first voltage source to the load.

3. Circuit arrangement according to Claim 1 or 2, wherein
the circuit arrangement is configured in such a way that the switch goes into the first switching state and closes when the voltage from the first voltage source falls below a threshold value.

4. Circuit arrangement according to one of Claims 1 to 3, furthermore comprising
a third voltage source, which, in the second branch, can be connected in series with the second voltage source.

5. Circuit arrangement according to Claim 4, furthermore comprising
a second and third switch, which are arranged and can be connected in such a way that, in the first switching state, when the first switch is closed, the first, second and third voltage source are connected in series for the purpose of supplying the load with power.

6. Circuit arrangement according to one of Claims 1 to 5, furthermore comprising
a charge circuit, which is connected to at least the second voltage source in such a way that, in a second switching state, when the switch is open, the second voltage source can be charged.

7. Circuit arrangement according to Claim 6, wherein
the charge circuit is connected in parallel with the at least second voltage source.

8. Circuit arrangement according to Claim 6 or 7, wherein
the charge circuit has at least one of a clocked transistor, a coil and a capacitor, for the purpose of limiting the charge current.

9. Circuit arrangement according to one of Claims 1 to 8, wherein
the switching element is configured to assume the first operating state having a first forward voltage greater than 0 V and to assume the second operating state having a second forward voltage between 0 V and the first forward voltage, wherein the switching element is switched on at the second forward voltage.

10. Circuit arrangement according to one of Claims 1 to 9, wherein
the switching element is a controllable semiconductor switch, preferably a power semiconductor.

11. On-board electrical system circuit having the circuit arrangement according to one of Claims 1 to 10, furthermore comprising
the first voltage source, and
the load.

12. On-board electrical system circuit according to Claim 11, wherein
the circuit arrangement is arranged in series between the first voltage source and the load.

13. On-board electrical system circuit according to Claim 11 or 12, wherein
the on-board electrical system circuit has a non-stabilized region and a stabilized region and the circuit arrangement is arranged in the stabilized region.

14. Vehicle having the on-board electrical system circuit according to one of Claims 11 to 13.

15. Control method for the voltage support of an on-board electrical system of a vehicle having a first voltage source and a parallel circuit connected in series, said parallel circuit comprising a switching element having a diode function in a first branch and comprising a switch and a second voltage source in a second branch for the purpose of supplying a downstream load with power, comprising the following steps:
closing the switch in the parallel circuit, with the result that the first and second voltage source are connected in series for the purpose of supplying the load with power; and
switching the switching element having the diode function from a second switched-on operating state to a first operating state having a current flow direction from the first voltage source to the load.

## Revendications

1. Arrangement de circuit destiné au soutien en tension d'un réseau de bord d'un véhicule, lequel peut être branché en série avec une première source de tension et un consommateur, comprenant :
un élément de commutation (110) ayant une fonction de diode, configuré pour adopter un premier état opérationnel avec un sens de passage du courant et un deuxième état opérationnel passant ;
un commutateur (120) ; et
une deuxième source de tension (140) destinée à délivrer une tension,
l'arrangement de circuit étant réalisé sous la forme d'un circuit parallèle, avec l'élément de commutation (110) dans une première branche et le commutateur (120) ainsi que la deuxième source de tension (140) dans une deuxième branche du circuit parallèle ; et
l'arrangement de circuit étant configuré et pouvant être relié à la première source de tension et au consommateur de telle sorte que dans un premier état de commutation, avec le commutateur fermé, la première et la deuxième source de tension (140) sont branchées en série pour l'alimentation du consommateur et l'élément de commutation (110) est disposé avec le sens de passage du courant de la première source de tension vers le consommateur.

2. Arrangement de circuit selon la revendication 1, l'arrangement de circuit étant configuré et pouvant être relié à la première source de tension et au consommateur de telle sorte que dans un deuxième état de commutation, avec le commutateur ouvert, la première source de tension est branchée en série avec le consommateur par le biais de l'élément de commutation pour l'alimentation du consommateur et l'élément de commutation est disposé avec le sens de passage de la première source de tension vers le consommateur.

3. Arrangement de circuit selon la revendication 1 ou 2, l'arrangement de circuit étant configuré de telle sorte que le commutateur passe dans le premier état de commutation et se ferme lorsque la tension de la première source de tension devient inférieure à une valeur de seuil.

4. Arrangement de circuit selon l'une des revendications 1 à 3, comprenant en outre une troisième source de tension qui peut être branchée en série avec la deuxième source de tension dans la deuxième branche.

5. Arrangement de circuit selon la revendication 4, comprenant en outre un deuxième et un troisième commutateur qui sont disposés et peuvent être commutés de telle sorte que dans le premier état de commutation, avec le premier commutateur fermé, les première, deuxième et troisième sources de tension sont branchées en série pour l'alimentation du consommateur.

6. Arrangement de circuit selon l'une des revendications 1 à 5, comprenant en outre un circuit de charge qui est relié au moins avec la deuxième source de tension de telle sorte que dans un deuxième état de commutation, avec le commutateur ouvert, la deuxième source de tension peut être chargée.

7. Arrangement de circuit selon la revendication 6, le circuit de charge étant branché en parallèle avec l'au moins deuxième source de tension.

8. Arrangement de circuit selon la revendication 6 ou 7, le circuit de charge, pour la limitation du courant de charge, possédant au moins l'un parmi un transistor cadencé, une bobine et un condensateur.

9. Arrangement de circuit selon l'une des revendications 1 à 8, l'élément de commutation étant configuré pour adopter le premier état opérationnel avec une première tension de passage supérieure à 0 V et le deuxième état opérationnel avec une deuxième tension de passage comprise entre 0 V et la première tension de passage, l'élément de commutation étant rendu passant en présence la deuxième tension de passage.

10. Arrangement de circuit selon l'une des revendications 1 à 9, l'élément de commutation étant un commutateur à semiconducteur commandable, de préférence un semiconducteur de puissance.

11. Circuit de réseau de bord comprenant un arrangement de circuit selon l'une des revendications 1 à 10, comprenant en outre
la première source de tension, et
le consommateur.

12. Circuit de réseau de bord selon la revendication 11, l'arrangement de circuit étant disposé en série entre la première source de tension et le consommateur.

13. Circuit de réseau de bord selon la revendication 11 ou 12, le circuit de réseau de bord possédant une zone non stabilisée et une zone stabilisée et l'arrangement de circuit étant disposé dans la zone stabilisée.

14. Véhicule équipé du circuit de réseau de bord selon l'une des revendications 11 à 13.

15. Procédé de commande pour le soutien en tension d'un réseau de bord d'un véhicule, comprenant une première source de tension et un circuit parallèle branché en série constitué d'un élément de commutation ayant une fonction de diode dans une première branche et un commutateur ainsi qu'une deuxième source de tension dans une deuxième branche pour l'alimentation d'un consommateur branché en aval, comprenant les étapes suivantes .
fermeture du commutateur dans le circuit parallèle, de sorte que la première et la deuxième source de tenson soient branchées en série pour l'alimentation du consommateur ; et
commutation de l'élément de commutation ayant une fonction de diode d'un deuxième état opérationnel passant en un premier état opérationnel avec un sens de passage du courant de la première source de tension vers le consommateur.
